# EUROPEAN PATENT APPLICATION

(11) **EP 4 332 452 A1**
(43) Date of publication of application: **06.03.2024**
(21) Application number: 21939217.2
(22) Date of filing: 27.04.2021
(51) Int. Cl.: F24F 11/61, F24F 11/79, F24F 11/86, F24F 110/10, F24F 110/12

(54) **AIR CONDITIONING DEVICE**

(71) Applicant: MITSUBISHI ELECTRIC CORPORATION, Chiyoda-ku Tokyo 100-8310 (JP)
(72) Inventor: ITO, Shinichi, Tokyo 100-8310 (JP); YAMAGUCHI, Harumi, Tokyo 100-8310 (JP)
(74) Representative: Studio Torta S.p.A.
(86) International application number: PCT/JP2021/016800
(87) International publication number: WO 2022/230056

(57) **Abstract**

An air-conditioning apparatus includes a heat source side unit including a compressor, a load side unit including a load side heat exchanger connected to the compressor via a refrigerant pipe, a fan provided in the load side unit, an air direction adjuster that is provided in the load side unit and that adjusts an air direction, which is a blow direction in which air is blown by the fan from the load side unit to an air-conditioned space, and a controller that controls the compressor, the fan, and the air direction adjuster. The controller determines whether or not the air-conditioned space is being ventilated and executes, in a case where the air-conditioned space is being ventilated, a fixed-swing mode in which a swing operation in which the air direction is changed over time by controlling the air direction adjuster is forcefully performed. At a time when the fixed-swing mode is to be entered, the controller activates the compressor when the compressor is stopped and continues operation of the compressor when the compressor is operating.

## Description

### Technical Field

The present disclosure relates to an air-conditioning apparatus including a load side unit having an air-sending function.

### Background Art

In recent years, it is becoming necessary to take measures against an infectious disease of coronavirus disease (COVID-19). COVID-19 infection occurs through droplets expelled from the mouth of an infected person. Infection can occur not only through a cough or sneeze of the infected person, or droplets expelled from the mouth during a conversation, but also through airborne droplets, which are droplets floating in the air. For this reason, in a room shared by many people, ventilation by which airborne droplets in the room are discharged is considered to be effective.

The existing main purpose of ventilation is not only to reduce the concentration of CO₂, but also to discharge pollens and various chemical substances from a room. Examples of various chemical substances include a chemical substance, such as formaldehyde, which is a factor in sick building syndrome, and a chemical substance, which is a factor in PM 2.5. These chemical substances diffuse relatively quickly. Thus, concentration irregularities are less likely to occur, and concentrations are uniformly reduced by ventilation. For this reason, in the past, only the provision of a certain volume of ventilation air has been able to reduce health risks caused by these pollens or chemical substances.

On the other hand, an airborne droplet, which may be an infectious cause of an infectious disease, is larger in mass and particle diameter than a molecule such as CO₂ and formaldehyde. For this reason, airborne droplets diffuse more slowly than such a molecule, and thus concentration irregularities are likely to occur. The simple provision of ventilation is not able to remove irregularities in the concentration of airborne droplets in the room, and there is a limit to a reduction in infectious risks. Furthermore, unlike pollens and chemical substances, droplets are produced in a human body, and thus measures, such as collection, for example, using a filter during an inflow of ventilation air, are ineffective. Consequently, measures using the introduction of outside air are important.

In the related art, an air-conditioning apparatus has been proposed that, when a door or window in a room is opened and there are dust particles in the room, sends air toward the door or window, sucks air including dust particles, and filters the air to thus automatically collect dust particles (see, for example, Patent Literature 1).

### Citation List

### Patent Literature

Patent Literature 1: Japanese Unexamined Patent Application Publication No. 2015-143592

### Summary of Invention

### Technical Problem

Ventilation by opening of a window is effective as a measure against infectious diseases. However, although the air-conditioning apparatus disclosed in Patent Literature 1 sends air intensively toward a window when the window is opened, there is a possibility that an area where air is locally stagnant in the room may occur. When there are airborne droplets in an area where air is stagnant, the airborne droplets are not discharged to the outside and are floating for a long time. On the other hand, when the window is opened for ventilation, outside air flows into the room to result in a change in room air temperature. When a difference between an outside air temperature and a room air temperature is large, there is a possibility that the health of a person present in the room may be damaged by a sudden change in room air temperature. For this reason, it is important to reduce health risks while implementing measures against infectious diseases.

To address the above-described issue, the present disclosure provides an air-conditioning apparatus by which infectious disease risks and health risks in an air-conditioned space are reduced.

### Solution to Problem

An air-conditioning apparatus according to an embodiment of the present disclosure includes a heat source side unit including a compressor and a heat source side heat exchanger, a load side unit including a load side heat exchanger connected to the compressor via a refrigerant pipe, a fan that is provided in the load side unit and that causes air sucked from an air-conditioned space to exchange heat with refrigerant at the load side heat exchanger and then sends the air to the air-conditioned space, an air direction adjuster that is provided in the load side unit and that adjusts an air direction, which is a blow direction in which air is blown by the fan from the load side unit to the air-conditioned space, and a controller that controls the compressor, the fan, and the air direction adjuster. The controller determines whether or not the air-conditioned space is being ventilated and executes, in a case where the air-conditioned space is being ventilated, a fixed-swing mode in which a swing operation in which the air direction is changed over time by controlling the air direction adjuster is forcefully performed. At a time when the fixed-swing mode is to be entered, the controller activates the compressor when the compressor is stopped and continues operation of the compressor when the compressor is operating.

### Advantageous Effects of Invention

In an embodiment of the present disclosure, when ventilation is provided, the compressor is activated when the compressor is stopped, and the operation of the compressor is continued when the compressor is operating. During ventilation, as for air-sending control, the swing operation is forcefully performed. For this reason, a significant change in room temperature is prevented, and air in a room is stirred to make it possible to also prevent the occurrence of an area where air is stagnant. As a result, not only a reduction in health risks to a person present in the room but also a reduction in infectious risks to the person present in the room can be achieved because, even when there are airborne droplets, which may be a cause of infectious diseases, in the room, the concentration of airborne droplets is leveled off.

### Brief Description of Drawings

[Fig. 1] Fig. 1 is a refrigerant circuit diagram illustrating an example of a configuration of an air-conditioning apparatus according to Embodiment 1.
[Fig. 2] Fig. 2 is a plan view illustrating an example of installation of a load side unit illustrated in Fig. 1.
[Fig. 3] Fig. 3 is an external perspective view illustrating an example of a configuration of the load side unit illustrated in Fig. 1.
[Fig. 4] Fig. 4 is a schematic diagram illustrating a relationship between an angle of vertical flaps illustrated in Fig. 3 and an air direction.
[Fig. 5] Fig. 5 is a schematic diagram illustrating a relationship between an angle of horizontal flaps illustrated in Fig. 3 and an air direction.
[Fig. 6] Fig. 6 is a block diagram illustrating an example of a configuration of a remote control.
[Fig. 7] Fig. 7 is a functional block diagram illustrating an example of a configuration of a controller illustrated in Fig. 1.
[Fig. 8] Fig. 8 is a hardware configuration diagram illustrating an example of the configuration of the controller illustrated in Fig. 7.
[Fig. 9] Fig. 9 is a hardware configuration diagram illustrating another example of the configuration of the controller illustrated in Fig. 7.
[Fig. 10] Fig. 10 is a flowchart illustrating an example of a procedure by which the air-conditioning apparatus according to Embodiment 1 is operated.
[Fig. 11] Fig. 11 is a plan view for describing the effect of a reduction in infectious risks achieved by the air-conditioning apparatus according to Embodiment 1.
[Fig. 12] Fig. 12 is a plan view for describing the effect of a reduction in infectious risks achieved by the air-conditioning apparatus according to Embodiment 1.
[Fig. 13] Fig. 13 is a flowchart illustrating an example of a process of step S101 illustrated in Fig. 10.
[Fig. 14] Fig. 14 is a flowchart illustrating another example of the process of step S101 illustrated in Fig. 10.
[Fig. 15] Fig. 15 is an external schematic view illustrating an example of a configuration of a load side unit of the air-conditioning apparatus according to Embodiment 2.
[Fig. 16] Fig. 16 is a functional block diagram illustrating an example of the configuration of the controller of the air-conditioning apparatus according to Embodiment 2.
[Fig. 17] Fig. 17 is a conceptual diagram illustrating an example of a case where a temperature distribution detected by an infrared sensor illustrated in Fig. 15 is displayed on a two-dimensional thermal image.
[Fig. 18] Fig. 18 is another conceptual diagram illustrating an example of a case where a temperature distribution detected by the infrared sensor illustrated in Fig. 15 is displayed on a two-dimensional thermal image.
[Fig. 19] Fig. 19 is a flowchart illustrating an example of the process of step S101 illustrated in Fig. 10 in Embodiment 2.

### Description of Embodiments

An air-conditioning apparatus according to Embodiments will be described with reference to the drawings. For convenience of explanation, in parts of drawings, arrows of three axes (X axis, Y axis, and Z axis) are illustrated to define directions. In each Embodiment, a direction opposite to a Z-axis arrow is a gravity direction.

### Embodiment 1

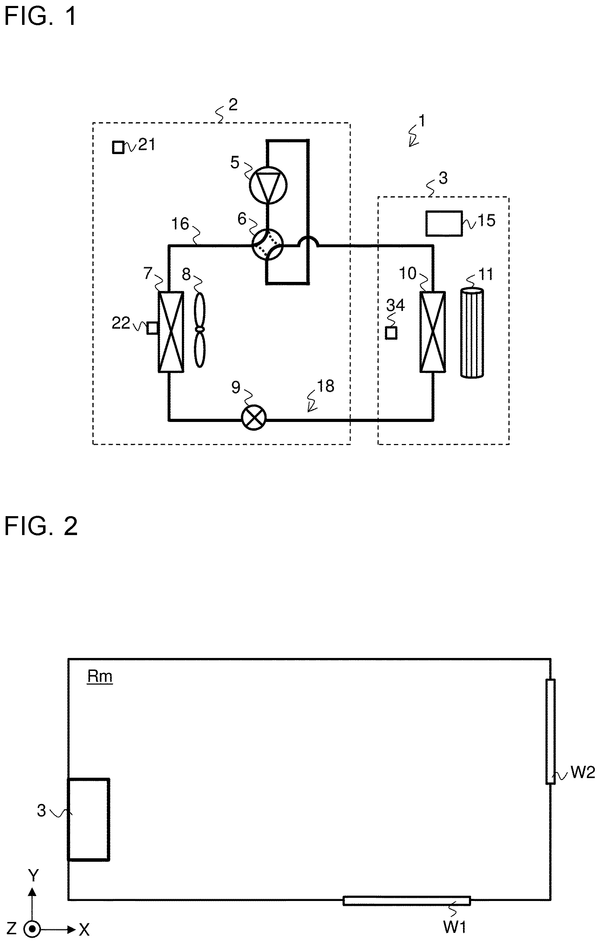

A configuration of an air-conditioning apparatus according to Embodiment 1 will be described. Fig. 1 is a refrigerant circuit diagram illustrating an example of a configuration of an air-conditioning apparatus according to Embodiment 1. An air-conditioning apparatus 1 includes a heat source side unit 2 and a load side unit 3. The heat source side unit 2 includes a compressor 5, a flow switching valve 6, a heat source side heat exchanger 7, an outdoor fan 8, and an expansion valve 9. The load side unit 3 includes a load side heat exchanger 10, an indoor fan 11, and a controller 15.

In the heat source side unit 2, an outside air temperature sensor 21, which detects an outside air temperature Tot, is provided. To the heat source side heat exchanger 7, a refrigerant temperature sensor 22, which detects a refrigerant temperature, is provided. The refrigerant temperature sensor 22 detects an evaporating temperature at the heat source side heat exchanger 7 during a heating operation and a condensing temperature at the heat source side heat exchanger 7 during a cooling operation. In the load side unit 3, a room temperature sensor 34, which detects a temperature of air in a room that is an air-conditioned space, is provided. The outside air temperature sensor 21, the refrigerant temperature sensor 22, and the room temperature sensor 34 are, for example, thermistors.

The compressor 5, the heat source side heat exchanger 7, the expansion valve 9, and the load side heat exchanger 10 are connected by a refrigerant pipe 16 to form a refrigerant circuit 18 through which refrigerant circulates. The controller 15 is connected to each of the compressor 5, the flow switching valve 6, the outdoor fan 8, the expansion valve 9, and the indoor fan 11 via a signal line, which is not illustrated. The controller 15 is connected to each of the outside air temperature sensor 21, the refrigerant temperature sensor 22, and the room temperature sensor 34 via a signal line, which is not illustrated. Although Fig. 1 illustrates a configuration in which the controller 15 is provided in the load side unit 3, the controller 15 may be provided in the heat source side unit 2.

The compressor 5 compresses and discharges sucked refrigerant. The compressor 5 is, for example, an inverter compressor whose capacity can be changed. In Embodiment 1, as for an operating frequency fc of the compressor 5, an upper limit value, which is a maximum possible operating frequency, is fcmax, and a lower limit value, which is a minimum possible operating frequency, is fcmin. The flow switching valve 6 changes a direction in which refrigerant flowing through the refrigerant circuit 18 flows. The flow switching valve 6 is, for example, a four-way valve. The expansion valve 9 reduces the pressure of refrigerant to cause the refrigerant to expand. The expansion valve 9 is, for example, an electronic expansion valve. The heat source side heat exchanger 7 is a heat exchanger that exchanges heat between refrigerant and outside air. The heat source side heat exchanger 7 is, for example, a fin-tube heat exchanger. The outdoor fan 8 supplies outside air to the heat source side heat exchanger 7. The outdoor fan 8 is, for example, a propeller fan.

The load side heat exchanger 10 is a heat exchanger that exchanges heat between refrigerant and air in the room. The load side heat exchanger 10 is, for example, a fin-tube heat exchanger. The indoor fan 11 supplies air in the room to the load side heat exchanger 10. The indoor fan 11 is, for example, a cross flow fan. The indoor fan 11 may be not only a cross flow fan but also a propeller fan.

Here, in each of the heating operation and the cooling operation performed by the air-conditioning apparatus 1, the flow of refrigerant in the refrigerant circuit 18 will be simply described with reference to Fig. 1.

### (Heating Operation)

Flow passages of the flow switching valve 6 are switched by the controller 15 such that refrigerant discharged from the compressor 5 flows into the load side heat exchanger 10. When low-temperature and low-pressure refrigerant is compressed by the compressor 5, high-temperature and high-pressure gaseous refrigerant is discharged from the compressor 5. The high-temperature and high-pressure gaseous refrigerant discharged from the compressor 5 flows through the flow switching valve 6 and flows into the load side heat exchanger 10. The refrigerant having flowed into the load side heat exchanger 10 is condensed into high-temperature and high-pressure liquid refrigerant by exchanging heat with air in the room at the load side heat exchanger 10 and flows out of the load side heat exchanger 10. At the load side heat exchanger 10, when the refrigerant transfers heat to air in the room, the air in the room is heated. The high-temperature and high-pressure liquid refrigerant having flowed out of the load side heat exchanger 10 is caused to turn into low-temperature and low-pressure liquid refrigerant by the expansion valve 9 and then flows into the heat source side heat exchanger 7. The refrigerant having flowed into the heat source side heat exchanger 7 evaporates into low-temperature and low-pressure gaseous refrigerant by exchanging heat with outside air at the heat source side heat exchanger 7 and flows out of the heat source side heat exchanger 7. The refrigerant having flowed out of the heat source side heat exchanger 7 is sucked into the compressor 5 via the flow switching valve 6.

### (Cooling Operation)

The flow passages of the flow switching valve 6 are switched by the controller 15 such that refrigerant discharged from the compressor 5 flows into the heat source side heat exchanger 7. High-temperature and high-pressure gaseous refrigerant discharged from the compressor 5 flows through the flow switching valve 6 and flows into the heat source side heat exchanger 7. The refrigerant having flowed into the heat source side heat exchanger 7 is condensed into low-temperature and high-pressure liquid refrigerant by exchanging heat with outside air at the heat source side heat exchanger 7 and flows out of the heat source side heat exchanger 7. The liquid refrigerant having flowed out of the heat source side heat exchanger 7 is caused to turn into low-temperature and low-pressure liquid refrigerant by the expansion valve 9 and then flows into the load side heat exchanger 10. The refrigerant having flowed into the load side heat exchanger 10 evaporates into low-temperature and low-pressure gaseous refrigerant by exchanging heat with air in the room at the load side heat exchanger 10 and flows out of the load side heat exchanger 10. At the load side heat exchanger 10, when the refrigerant receives heat from air in the room, the air in the room is cooled. The refrigerant having flowed out of the load side heat exchanger 10 flows through the flow switching valve 6 and is sucked into the compressor 5.

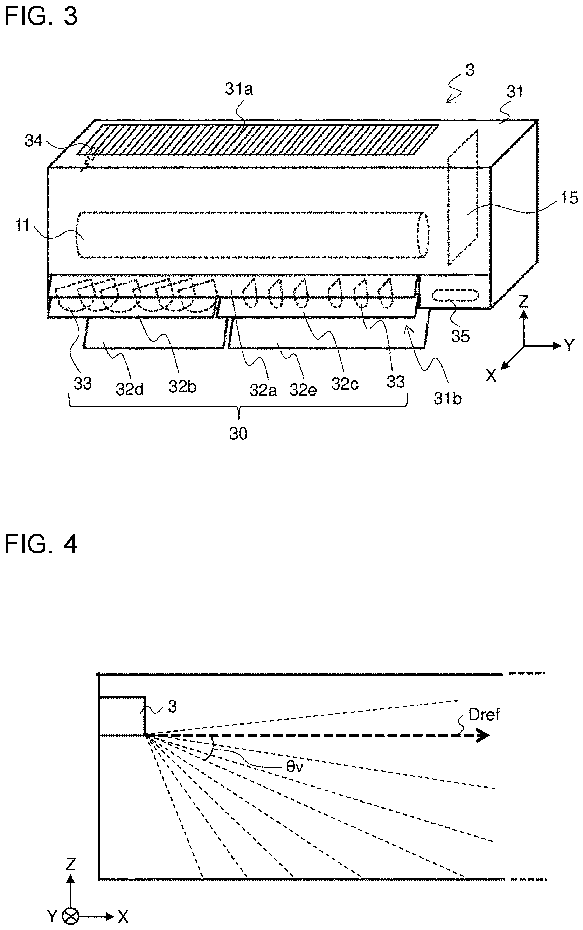

Next, an example of installation of the load side unit 3 illustrated in Fig. 1 will be described. Fig. 2 is a plan view illustrating an example of installation of the load side unit illustrated in Fig. 1. Fig. 3 is an external perspective view illustrating an example of a configuration of the load side unit illustrated in Fig. 1. In Fig. 3, the load side heat exchanger 10 illustrated in Fig. 1 is omitted. In the load side unit 3 illustrated in Fig. 3, a Y-axis arrow direction is a frontward direction, and a Z-axis arrow direction is an upward direction.

As illustrated in Fig. 2, the load side unit 3 is installed in a room Rm, which is an air-conditioned space. In the room Rm illustrated in Fig. 2, two windows W1 and W2 are provided that can provide ventilation by which, when the windows W1 and W2 are opened, air in the room Rm is discharged to the outside and outside air is introduced into the room Rm. The number of windows provided in the room Rm is not limited to two. Furthermore, ventilation is not limited to ventilation using a window. A natural air vent (not illustrated) may be provided in the room Rm, or alternatively, a ventilator (not illustrated), such as a ventilation fan, that discharges air in the room Rm to the outside may be provided on a wall in the room Rm.

As illustrated in Fig. 3, the load side unit 3 includes a casing 31, which houses the indoor fan 11, the controller 15, and the load side heat exchanger 10 illustrated in Fig. 1. At the top of the casing 31, an air inlet 31 a, through which air from the room Rm is sucked, is provided. To the air inlet 31a, the room temperature sensor 34, which detects a room temperature Trm in the room Rm, is provided. To the front of the casing 31, an air outlet 31b, through which air having been subjected to heat exchange with refrigerant at the load side heat exchanger 10 is blown into the room Rm, is provided.

Furthermore, as illustrated in Fig. 3, to the air outlet 31b of the load side unit 3, an air direction adjuster 30, which adjusts an air direction, which is a blow direction in which air is blown from the load side unit 3, is provided. The air direction adjuster 30 includes vertical flaps 32a to 32e, which change an air direction vertically to a predetermined reference direction Dref, and horizontal flaps 33, which change an air direction horizontally to the reference direction Dref. The vertical flaps 32a to 32e are rectangular plates extending in a horizontal direction (Y-axis direction) at the front of the casing 31. The horizontal flaps 33 are plates extending in a front-back direction (X-axis direction) of the casing 31. As for the horizontal flaps 33, six horizontal flaps 33 are provided on the left of the center of the front of the air outlet 31b, and six horizontal flaps 33 are provided on the right of the center of the front of the air outlet 31b.

Fig. 4 is a schematic diagram illustrating a relationship between an angle of the vertical flaps illustrated in Fig. 3 and an air direction. As illustrated in Fig. 4, the frontward direction (X-axis arrow direction) of the load side unit 3 is the reference direction Dref. An angle of the vertical flaps 32a to 32e illustrated in Fig. 3 inclined to the reference direction Dref is denoted by θv. The angle θv is an angle at which the vertical flaps 32a to 32e are inclined upward (toward a Z-axis direction) or downward (toward a direction opposite to the Z-axis arrow) from the reference direction Dref. A motor, which is not illustrated, is connected to the vertical flaps 32a to 32e. When the controller 15 controls the motor (not illustrated) to cause it to rotate, the vertical flaps 32a to 32e are moved upward or downward, and the angle θv is adjusted. When the angle θv of the vertical flaps 32a to 32e is adjusted, an air direction, which is a blow direction in which air is blown from the load side unit 3, is adjusted vertically (in a vertical direction) from a floor surface in the room Rm.

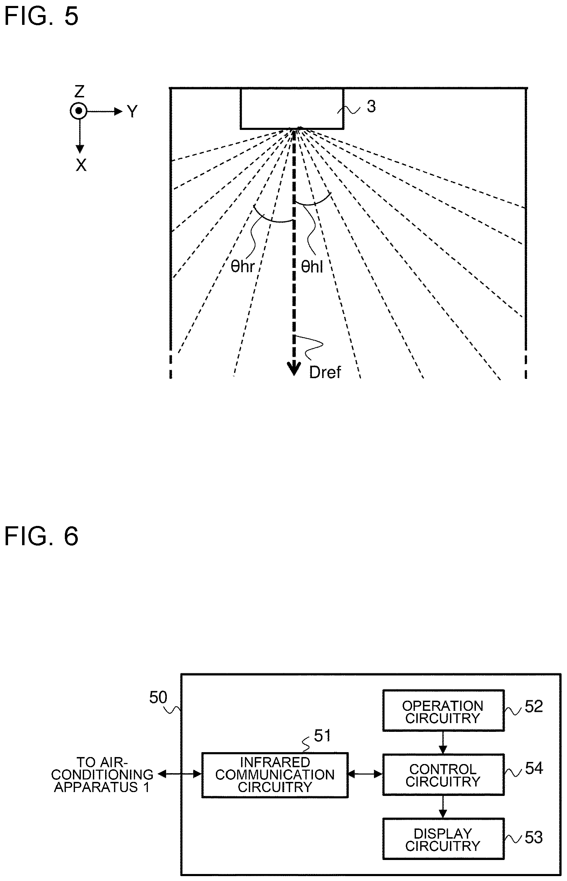

Fig. 5 is a schematic diagram illustrating a relationship between an angle of the horizontal flaps illustrated in Fig. 3 and an air direction. As illustrated in Fig. 5, the frontward direction (X-axis arrow direction) of the load side unit 3 is the reference direction Dref. An angle of the horizontal flaps 33 illustrated in Fig. 3 inclined to the reference direction Dref is denoted by θh. As for the angle θh, as seen from the load side unit 3 illustrated in Fig. 5 in the X-axis arrow direction, an angle at which the horizontal flaps 33 are inclined rightward (a direction opposite to a Y-axis arrow) from the reference direction Dref is denoted by θhr, and an angle at which the horizontal flaps 33 are inclined leftward (Y-axis arrow direction) from the reference direction Dref is denoted by θhl. A motor, which is not illustrated, is connected to the horizontal flaps 33. When the controller 15 controls the motor (not illustrated) to cause it to rotate, the horizontal flaps 33 are moved leftward or rightward, and the angle θh is adjusted. When the angle θh of the horizontal flaps 33 is adjusted, an air direction, which is a blow direction in which air is blown from the load side unit 3, is adjusted horizontally (in the horizontal direction) from the floor surface in the room Rm.

Furthermore, to the front of the load side unit 3, a remote control (not illustrated) operated by a user to input a command to the air-conditioning apparatus 1, and an infrared communication device 35 used by the controller 15 to perform communication over infrared rays are provided. Here, a configuration of the remote control (not illustrated) will be simply described.

Fig. 6 is a block diagram illustrating an example of a configuration of a remote control. A remote control 50 includes infrared communication circuitry 51, operation circuitry 52, display circuitry 53, and control circuitry control circuitry 54. The control circuitry 54 includes a memory (not illustrated) that stores a program, and a central processing unit (CPU) (not illustrated) that executes a process in accordance with a program.

When the user operates the operation circuitry 52 to input an operation mode of the air-conditioning apparatus 1, a set temperature Tset for the room Rm, air volume, and an air direction, the control circuitry 54 transmits these input details to the controller 15 via the infrared communication circuitry 51. The control circuitry 54 may cause the display circuitry 53 to display the details set by the user. Furthermore, the control circuitry 54 causes the display circuitry 53 to display information received from the controller 15 via the infrared communication circuitry 51.

To the remote control 50, a speaker (not illustrated) may be provided. When the control circuitry 54 outputs, to the speaker, information received from the controller 15, the user can be notified of the information received from the controller 15 by voice. In this case, even when the user is not able to see the display circuitry 53 because the user is away from the remote control 50, the user can understand the information output from the air-conditioning apparatus 1. Furthermore, a terminal that outputs information transmitted from the controller 15 is not limited to the remote control 50. For example, when a tablet terminal (not illustrated), such as a smartphone, carried by the user includes means that communicates with the controller 15, the controller 15 may transmit, to the tablet terminal, information of which the user is to be notified. The tablet terminal (not illustrated) may display information received from the controller 15 on display circuitry or may output the information as a voice message from a speaker.

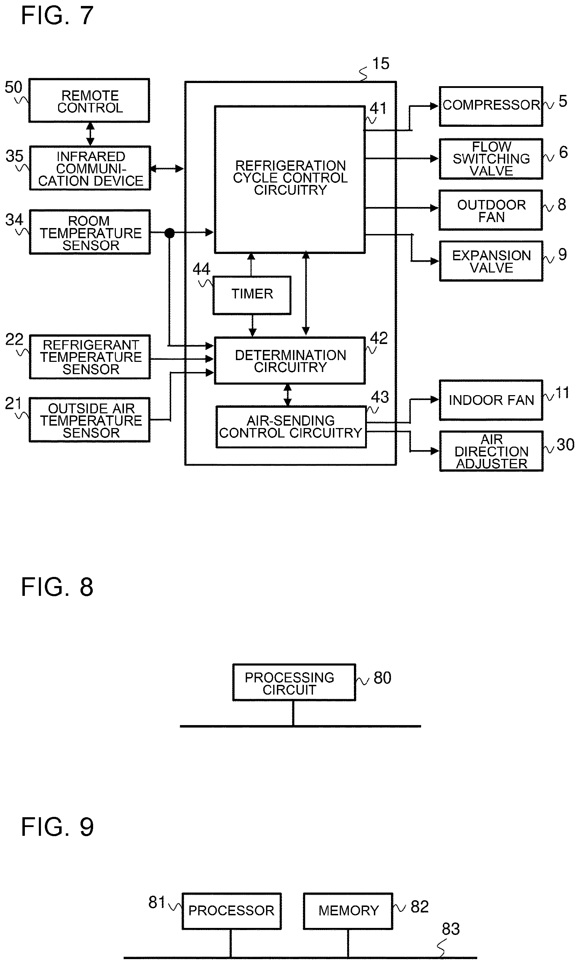

Next, a configuration of the controller 15 illustrated in Fig. 1 will be described. Fig. 7 is a functional block diagram illustrating an example of the configuration of the controller illustrated in Fig. 1. The controller 15 is, for example, a microcomputer. The controller 15 includes refrigeration cycle control circuitry 41, determination circuitry 42, air-sending control circuitry 43, and a timer 44, which measures a time period. In the controller 15, when an arithmetic device, such as a processor, executes software, various functions are implemented. Furthermore, the controller 15 may be formed by hardware, such as a circuit device, that implements various functions.

Before the configuration of the controller 15 is described in detail, an operation mode of the air-conditioning apparatus 1 will be described. As an operation mode of the air-conditioning apparatus 1, there are a heating operation mode, a cooling operation mode, a defrosting mode, and an air-sending mode. The air-sending mode is a mode in which air is only sent without a heat pump being operated. In Embodiment 1, cases of the heating operation mode and the cooling operation mode will be described. Each of the heating operation mode and the cooling operation mode is a mode in which temperature control and air-sending control are combined. The air-sending control includes air volume control and air direction control.

In the air-sending control, there are a normal air-sending mode in which air-sending control is executed in accordance with air volume and an air direction set by the user, and a fixed-swing mode in which a swing operation in which an air direction is changed over time is forcefully performed regardless of settings made by the user. The fixed-swing mode is a mode in which infectious risks due to airborne droplets, which may be a cause of infectious diseases, are reduced.

In the temperature control, there are a normal temperature control mode in which heat pump control is executed in accordance with the room temperature Trm and the set temperature Tset, and a temperature change moderation mode in which heat pump control in which a change in the room temperature Trm resulting from ventilation is moderated is executed. For example, when the user sets the heating operation mode in the air-conditioning apparatus 1, the heating operation mode is implemented by combining the normal air-sending mode and the normal temperature control mode.

In the temperature change moderation mode, temperature control is executed by using a parameter different from the room temperature Trm. The parameter different from the room temperature Trm is any of the outside air temperature Tot, and a condensing temperature and an evaporating temperature at the heat source side heat exchanger 7. The parameter different from the room temperature Trm is hereinafter referred to as a monitoring value Vmn. As for each of the above-described modes, the configuration of the controller 15 will be described with reference to Fig. 7.

The determination circuitry 42 determines whether or not the room Rm is being ventilated. For example, when the room temperature Trm changes significantly in a short time, the determination circuitry 42 determines that the room Rm is being ventilated. When the determination circuitry 42 determines that the room Rm is not being ventilated, the determination circuitry 42 causes the refrigeration cycle control circuitry 41 to execute the normal temperature control mode and the air-sending control circuitry 43 to execute the normal air-sending mode.

On the other hand, when the determination circuitry 42 determines that the room Rm is being ventilated, the determination circuitry 42 causes the air-sending control circuitry 43 to execute the fixed-swing mode and also stores the room temperature Trm at this time. The room temperature Trm at this time is denoted by Tsat. Furthermore, when the determination circuitry 42 determines that the room Rm is being ventilated, the determination circuitry 42 sets, as the monitoring value Vmn, any one of the outside air temperature Tot, a condensing temperature, and an evaporating temperature. Subsequently, the determination circuitry 42 calculates an absolute value Abv of a difference between the monitoring value Vmn and a set temperature for the monitoring value Vmn and compares the absolute value Abv with a predetermined first threshold value th1, a predetermined second threshold value th2, and a predetermined third threshold value th3.

Incidentally, the determination circuitry 42 stores set temperatures for respective monitoring values Vmn of the outside air temperature Tot, the condensing temperature, and the evaporating temperature. When the monitoring value Vmn is the outside air temperature Tot, a set temperature may differ according to the heating operation mode and the cooling operation mode. For example, when the monitoring value Vmn is the outside air temperature Tot in the cooling operation mode, a set temperature is set at an average temperature in summer in an area in which the air-conditioning apparatus 1 is installed.

The first threshold value th1 is a criterion for determining whether to cause the compressor 5 to maintain a set operating frequency fc or to cause the compressor 5 to perform high capacity operation to increase the operating frequency fc. The second threshold value th2 is a criterion for determining whether to cause the compressor 5 to perform low capacity operation to reduce the operating frequency fc. The third threshold value th3 is a criterion for determining whether to notify the user of a prompting message about an increase in ventilation air volume. In the prompting message, it is recommended that ventilation air volume be increased, for example, by keeping a window open at all times or increasing air volume of a ventilation fan. A relationship among the first threshold value th1, the second threshold value th2, and the third threshold value th3 is th2 < th1 < th3. When the monitoring value Vmn is the outside air temperature Tot, the first threshold value th1, the second threshold value th2, and the third threshold value th3 are, for example, th1 = 10 degrees C, th2 = 5 degrees C, and th3 = 15 degrees C.

As a result of comparisons of the absolute value Abv with the first threshold value th1, the second threshold value th2, and the third threshold value th3, when a relationship of Abv < th2 holds true, the determination circuitry 42 causes the refrigeration cycle control circuitry 41 to execute the normal temperature control mode. Furthermore, when a relationship of th2 ≤ Abv < th1 holds true, the determination circuitry 42 causes the refrigeration cycle control circuitry 41 to execute the temperature change moderation mode. Additionally, when a relationship of th1 ≤ Abv < th3 holds true, the determination circuitry 42 causes the refrigeration cycle control circuitry 41 to execute the temperature change moderation mode.

Furthermore, the determination circuitry 42 causes the timer 44 to measure an elapsed time period tp since entry into the fixed-swing mode. Subsequently, when the elapsed time period tp reaches or exceeds a predetermined waiting time period Watt, the determination circuitry 42 compares an absolute value of an amount of change ΔTrm in the room temperature Trm with a predetermined first change threshold value thch1. When the absolute value of the amount of change ΔTrm is smaller than the first change threshold value thch1, the determination circuitry 42 causes the refrigeration cycle control circuitry 41 to maintain the normal temperature control mode. When the absolute value of the amount of change ΔTrm is larger than or equal to the first change threshold value thch1, the determination circuitry 42 causes the refrigeration cycle control circuitry 41 to execute the temperature change moderation mode.

Furthermore, when a relationship of th3 ≤ Abv holds true, the determination circuitry 42 causes the refrigeration cycle control circuitry 41 to maintain the normal temperature control mode and notifies the user of a prompting message about an increase in ventilation air volume stating that a window is to be kept open at all times or that air volume of a ventilation fan is to be increased. Specifically, the determination circuitry 42 transmits the prompting message about an increase in ventilation air volume to the remote control 50 via the infrared communication device 35.

The refrigeration cycle control circuitry 41 stores the set temperature Tset set by the user. When the operation mode of the air-conditioning apparatus 1 is set to the heating operation mode, the refrigeration cycle control circuitry 41 controls the flow switching valve 6 such that refrigerant discharged from the compressor 5 flows into the load side heat exchanger 10. When the operation mode of the air-conditioning apparatus 1 is set to the cooling operation mode, the refrigeration cycle control circuitry 41 controls the flow switching valve 6 such that refrigerant discharged from the compressor 5 flows into the heat source side heat exchanger 7. In the normal temperature control mode, the refrigeration cycle control circuitry 41 compares the room temperature Trm with the set temperature Tset and controls the operating frequency fc of the compressor 5, an opening degree of the expansion valve 9, and a rotation frequency of the outdoor fan 8 such that the room temperature Trm falls within a range determined with reference to the set temperature Tset.

In the temperature change moderation mode, the refrigeration cycle control circuitry 41 controls the operating frequency fc of the compressor 5, the opening degree of the expansion valve 9, and the rotation frequency of the outdoor fan 8 in accordance with a result of a determination made by the determination circuitry 42. When the relationship of th2 ≤ Abv < th1 holds true, for example, the refrigeration cycle control circuitry 41 makes the operating frequency fc of the compressor 5 smaller than an operating frequency fc before entry into the fixed-swing mode. When the relationship of th1 ≤ Abv < th3 holds true, for example, the refrigeration cycle control circuitry 41 makes the operating frequency fc of the compressor 5 larger than the operating frequency fc before entry into the fixed-swing mode.

The air-sending control circuitry 43 stores air volume and an air direction that are set by the user. In the normal air-sending mode, the air-sending control circuitry 43 exercises air-sending control in accordance with the air volume and the air direction that are set by the user. On the other hand, in the fixed-swing mode, the air-sending control circuitry 43 fixes air-sending control to the swing operation. In the fixed-swing mode, the air-sending control circuitry 43 forcefully performs the swing operation even when the swing operation is not set by the user in the normal air-sending mode. In the fixed-swing mode, for example, the air-sending control circuitry 43 changes an angle of an air direction inclined to the reference direction Dref in one or both of the horizontal direction and the vertical direction by controlling the air direction adjuster 30. Specifically, in the fixed-swing mode, the air-sending control circuitry 43 controls angles of some or all of the vertical flaps 32a to 32e and horizontal flaps 33 such that an air direction is changed over time.

The air-sending control circuitry 43 may hold, as a swing pattern, a combination of operation of the vertical flaps 32a to 32e and operation of the horizontal flaps 33 in the fixed-swing mode. The air-sending control circuitry 43 performs the swing operation in accordance with a set swing pattern. For example, when a swing pattern is set in which the trajectory of an air direction describes sides of a quadrilateral, the air-sending control circuitry 43 controls the vertical flaps 32a to 32e and the horizontal flaps 33 such that an air direction is changed to a lower-left direction, a lower-right direction, an upper-right direction, and an upper-left direction in this order. A change in air direction may be a vertical or horizontal change in air direction or may be an oblique change in air direction obtained by combining vertical and horizontal changes in air direction. Furthermore, the trajectory of an air direction of a swing pattern may describe not only sides of a quadrilateral but also the form of the letter L, the letter M, the letter S, the letter U, the letter V, the letter Z, or the figure 8. Additionally, the trajectory of an air direction of a swing pattern may describe a form obtained by rotating these letters or figure to any angle, such as 90 degrees, or may describe a form obtained by flipping these letters or figure horizontally or vertically.

Swing velocity in air direction control executed by the air-sending control circuitry 43 in the fixed-swing mode will be described. Swing velocity is velocity at which an air direction is changed by operation of the vertical flaps 32a to 32e and horizontal flaps 33 and corresponds to an amount of angular change of the vertical flaps 32a to 32e and horizontal flaps 33 per unit time. In the fixed-swing mode, the air-sending control circuitry 43 may control the motors (not illustrated) of the vertical flaps 32a to 32e and the horizontal flaps 33 such that the swing velocity is slower than a predetermined reference velocity. The reference velocity is, for example, a swing velocity in the swing operation set by the user in the normal air-sending mode. In the fixed-swing mode, a distance traveled by air that is sent can be increased by making the swing velocity slower than a swing velocity in the normal air-sending mode. The swing velocity in the fixed-swing mode is set for the purpose of causing air blown from the load side unit 3 to reach every corner of the room Rm. The swing velocity in the fixed-swing mode may be set to a velocity faster than the swing velocity in the normal air-sending mode as long as this purpose is sufficiently achieved even when the swing velocity in the fixed-swing mode is the same as the swing velocity in the normal air-sending mode.

Air volume in air direction control executed by the air-sending control circuitry 43 in the fixed-swing mode will be described. In the fixed-swing mode, the air-sending control circuitry 43 may control a rotation frequency of the indoor fan 11 such that air volume reaches a maximum possible. Note that the air volume in the fixed-swing mode is set for the purpose of causing air blown from the load side unit 3 to reach every corner of the room Rm. For this reason, the air-sending control circuitry 43 does not have to set the rotation frequency of the indoor fan 11 to a maximum possible value as long as this purpose is sufficiently achieved even when the air volume of the indoor fan 11 is not caused to reach the maximum possible.

Here, an example of hardware of the controller 15 illustrated in Fig. 7 will be described. Fig. 8 is a hardware configuration diagram illustrating an example of the configuration of the controller illustrated in Fig. 7. In a case where various functions of the controller 15 are executed by hardware, the controller 15 illustrated in Fig. 7 is formed by a processing circuit 80 as illustrated in Fig. 8. Functions of the refrigeration cycle control circuitry 41, the determination circuitry 42, and the air-sending control circuitry 43, which are illustrated in Fig. 7, are implemented by the processing circuit 80.

In a case where each function is executed by hardware, the processing circuit 80 corresponds to, for example, a single circuit, a complex circuit, a programmed processor, a parallel programmed processor, an application specific integrated circuit (ASIC), a field-programmable gate array (FPGA), or a combination of these. Functions of means, which are the refrigeration cycle control circuitry 41, the determination circuitry 42, and the air-sending control circuitry 43 may be implemented by respective processing circuits 80. Alternatively, the functions of the means, which are the refrigeration cycle control circuitry 41, the determination circuitry 42, and the air-sending control circuitry 43 may be implemented by one processing circuit 80.

Furthermore, an example of other hardware of the controller 15 illustrated in Fig. 7 will be described. Fig. 9 is a hardware configuration diagram illustrating another example of the configuration of the controller illustrated in Fig. 7. In a case where various functions of the controller 15 are executed by software, the controller 15 illustrated in Fig. 7 is formed by a processor 81, such as a CPU, and a memory 82 as illustrated in Fig. 9. Functions of the refrigeration cycle control circuitry 41, the determination circuitry 42, and the air-sending control circuitry 43 are implemented by the processor 81 and the memory 82. Fig. 9 illustrates that the processor 81 and the memory 82 are connected to each other via a bus 83 such as that the processor 81 and the memory 82 can communicate with each other. The memory 82 stores set temperatures for respective monitoring values Vmn of the outside air temperature Tot, the condensing temperature, and the evaporating temperature, predetermined values, such as the first threshold value th1 to the third threshold value th3, and a swing pattern.

In a case where each function is executed by software, the functions of the refrigeration cycle control circuitry 41, the determination circuitry 42, and the air-sending control circuitry 43 are implemented by software, firmware, or a combination of software and firmware. Software and firmware are written as programs and stored in the memory 82. The processor 81 reads out a program stored in the memory 82 and executes the program to thereby implement a function of each means.

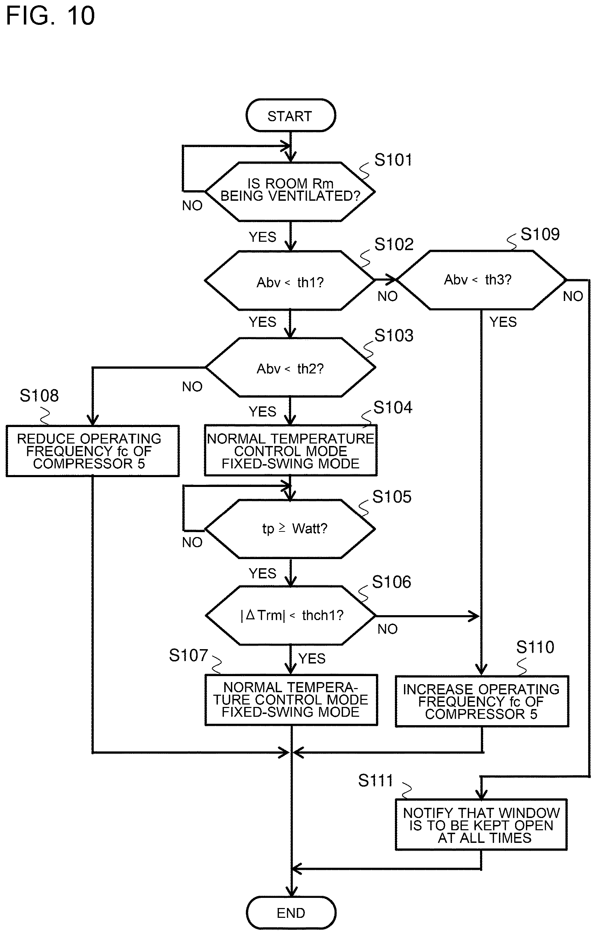

Next, operation of the air-conditioning apparatus 1 according to Embodiment 1 will be described. Fig. 10 is a flowchart illustrating an example of a procedure by which the air-conditioning apparatus according to Embodiment 1 is operated. Here, as an initial step, the air-conditioning apparatus 1 is performing the heating operation in accordance with settings made by the user. Furthermore, a description will be provided by using a case where the monitoring value Vmn is the outside air temperature Tot.

The determination circuitry 42 determines whether or not the room Rm is being ventilated (step S101). A specific example of step S101 will be described later. When the room Rm is not being ventilated, the determination circuitry 42 repeats making a determination in step S101. In step S101, when the room Rm is being ventilated, the determination circuitry 42 causes the air-sending control circuitry 43 to execute the fixed-swing mode and also stores a room temperature Tsat at this time. Furthermore, the determination circuitry 42 causes the timer 44 to measure an elapsed time period tp since entry into the fixed-swing mode. The air-sending control circuitry 43 switches from the normal air-sending mode to the fixed-swing mode in which the swing operation is forcefully performed.

The determination circuitry 42 sets the outside air temperature Tot as the monitoring value Vmn and calculates an absolute value Abv of a difference between the monitoring value Vmn and a set temperature for the monitoring value Vmn. Subsequently, the determination circuitry 42 determines whether or not the absolute value Abv is smaller than the first threshold value th1 (step S102). When the absolute value Abv is smaller than the first threshold value th1, the determination circuitry 42 determines whether or not the absolute value Abv is smaller than the second threshold value th2 (step S103).

As a result of the determination made in step S103, when the absolute value Abv is smaller than the second threshold value th2, as for temperature control, the refrigeration cycle control circuitry 41 maintains the normal temperature control mode (step S104). That is, the refrigeration cycle control circuitry 41 controls the operating frequency fc of the compressor 5, the opening degree of the expansion valve 9, and the rotation frequency of the outdoor fan 8 such that the room temperature Trm falls within the range determined with reference to the set temperature Tset. Here, even when a window is kept open for ventilation, the determination circuitry 42 determines that there is no significant change in the room temperature Trm. As for temperature control, the normal temperature control mode before entry into the fixed-swing mode is maintained. As for air-sending control, however, the fixed-swing mode is maintained.

Subsequently, the determination circuitry 42 determines whether or not an elapsed time period tp measured by the timer 44 is longer than or equal to the waiting time period Watt (step S105). When the elapsed time period tp is longer than or equal to the waiting time period Watt, the determination circuitry 42 calculates an absolute value of an amount of change ΔTrm in the room temperature Trm. The absolute value of the amount of change ΔTrm is calculated by an expression = |Tsat - Trm| where Trm is a current room temperature. The determination circuitry 42 determines whether or not the absolute value |ΔTrm| of the amount of change in the room temperature Trm is smaller than the first change threshold value thch1 (step S106). When the absolute value |ΔTrm| of the amount of change in the room temperature Trm is smaller than the first change threshold value thch1, as for temperature control, the refrigeration cycle control circuitry 41 maintains the normal temperature control mode (step S107). This is because there is no significant change in the room temperature Trm even when a window is kept open for ventilation as in step S104. In step S107 as well, the fixed-swing mode is maintained.

On the other hand, as a result of the determination made in step S103, when the absolute value Abv is larger than or equal to the second threshold value th2, as for temperature control, the refrigeration cycle control circuitry 41 executes the temperature change moderation mode. In step S108, the refrigeration cycle control circuitry 41 makes the operating frequency fc of the compressor 5 smaller than an operating frequency fc before entry into the fixed-swing mode. Specifically, the refrigeration cycle control circuitry 41 sets the operating frequency fc of the compressor 5 within a range larger than or equal to the lower limit value fcmin of the operating frequency fc and smaller than or equal to the operating frequency fc before entry into the fixed-swing mode. Thus, the compressor 5 performs low capacity operation.

Step S108 makes it possible to moderate a decrease in the room temperature Trm due to opening of the window. Furthermore, in comparison with a case where the compressor 5 is stopped when ventilation is started and the compressor 5 is activated when ventilation is finished, refrigerant differential pressure does not change significantly, and thus the load of the compressor 5 is reduced, enabling energy savings.

In step S108, the refrigeration cycle control circuitry 41 may determine an operating frequency fx to be set for the compressor 5 in response to the absolute value Abv and maintain the operating frequency fc of the compressor at the determined fixed operating frequency fx while the fixed-swing mode is being executed. The operating frequency fc of the compressor 5 is determined on the basis of a condition that an air-conditioning load is likely to be increased by outside air when the room is ventilated. Furthermore, when the operating frequency fc of the compressor 5 is fixed, a refrigeration cycle circuit is stabilized, enabling an improvement in energy saving performance.

For example, due to the swing operation, there can be, in the room, areas that are largely affected and slightly affected by cold air resulting from outside air, and thus a temperature at the location of the room temperature sensor 34, which detects the room temperature Trm, is also likely to change. In this case as well, the operating frequency fc is determined on the basis of the absolute value Abv, and thus amplitude control based on a reference frequency can be kept from being executed on the operating frequency fc set for the compressor 5 according to a change in the room temperature Trm. As a result, the load of the compressor 5 is reduced, enabling an improvement in energy saving performance.

As a result of the determination made in step S102, when the absolute value Abv is larger than or equal to the first threshold value th1, the determination circuitry 42 determines whether or not the absolute value Abv is smaller than the third threshold value th3 (step S109). As a result of the determination made in step S109, when the absolute value Abv is smaller than the third threshold value th3, the controller 15 proceeds to a process of step S110. Furthermore, as a result of the determination made in step S106, when the absolute value |ΔTrm| of the amount of change in the room temperature Trm is larger than or equal to the first change threshold value thch1, the controller 15 proceeds to the process of step S110.

In step S110, as for temperature control, the refrigeration cycle control circuitry 41 executes the temperature change moderation mode. Specifically, the refrigeration cycle control circuitry 41 makes the operating frequency fc of the compressor 5 larger than an operating frequency fc before entry into the fixed-swing mode. Thus, the compressor 5 performs high capacity operation. In step S110, the air-conditioning apparatus 1 performs air circulation in the room through the swing operation while continuing air conditioning.

Step S110 makes it possible to moderate a decrease in the room temperature Trm due to opening of the window. Furthermore, when the operating frequency fc of the compressor 5 is increased when ventilation is started and before the room temperature Trm decreases significantly, a sudden change in the room temperature Trm resulting from outside air is prevented, enabling an improvement in the comfort of the user present in the room Rm.

In step S110, the refrigeration cycle control circuitry 41 may increase the operating frequency fc in response to the absolute value Abv while the fixed-swing mode is being executed. An increment of the operating frequency fc of the compressor 5 is determined in response to the absolute value Abv on the basis of a condition that an air-conditioning load is likely to be increased by outside air when the room is ventilated. This can keep excessive air-conditioning capacity from being supplied while preventing a decrease in the room temperature Trm.

As a result of the determination made in step S109, when the absolute value Abv is larger than or equal to the third threshold value th3, as for temperature control, the refrigeration cycle control circuitry 41 maintains the normal temperature control mode. Furthermore, the determination circuitry 42 notifies the user of a prompting message about an increase in ventilation air volume stating that a window is to be kept open at all times or that air volume of a ventilator (not illustrated) is to be increased (step S111). Specifically, the determination circuitry 42 transmits the prompting message about an increase in ventilation air volume to the remote control 50 via the infrared communication device 35. When the control circuitry 54 of the remote control 50 receives, from the controller 15, the prompting message about an increase in ventilation air volume, the control circuitry 54 causes the display circuitry 53 to display the prompting message about an increase in ventilation air volume.

In step S111, the air-conditioning apparatus 1 instructs the user to provide ventilation at all times while the air-conditioning apparatus 1 is maintaining an air-conditioning operation. Specifically, the user is requested, instead of reducing the opening area of the window kept open, to keep a window open at all times or to increase air volume of a ventilator (not illustrated). When a temperature difference between the room temperature Trm and the outside air temperature Tot is large, the integrated value of ventilation air volume is increased not by temporarily increasing ventilation air volume but by maintaining ventilation at all times, thus reducing health risks due to a temperature difference while measures against infectious diseases are implemented. For example, when the outside air temperature is extremely low, the body of a person present in the room Rm where the heating operation is being performed suddenly gets cold when a window is opened wide. Such a health risk is reduced.

Incidentally, in step S110, the determination circuitry 42 may cause the air-sending control circuitry 43 to temporarily stop the fixed-swing mode. In this case, after a fixed time period elapses from the time when the air-sending control circuitry 43 stops the fixed-swing mode, the determination circuitry 42 again causes the air-sending control circuitry 43 to execute the fixed-swing mode.

Furthermore, in steps S104, S108, S110, and S111, the refrigeration cycle control circuitry 41 activates the compressor 5 when the compressor 5 is stopped. The compressor 5 is activated to moderate a change in the room temperature Trm because the room temperature Trm in the room Rm is changed by outside air through ventilation. This can keep the health of a person present in the room Rm from being damaged by a sudden change in the room temperature Trm.

The end of the process flow illustrated in Fig. 10 is triggered, for example, when the elapsed time period tp since entry into the fixed-swing mode reaches a predetermined ventilation time period tk. The ventilation time period is, for example, five minutes. When the elapsed time period tp reaches the ventilation time period tk, the determination circuitry 42 causes the air-sending control circuitry 43 to stop the fixed-swing mode. The air-sending control circuitry 43 stops the fixed-swing mode and causes the normal air-sending mode to be entered. When the elapsed time period tp reaches the ventilation time period tk, the determination circuitry 42 may notify the user, via the remote control 50, of a ventilation completion message stating that ventilation has been performed in the set time period.

Furthermore, even when the elapsed time period tp reaches the ventilation time period tk, when the user wants ventilation to be continued, the user may input a ventilation continuation command for ventilation to be continued by operating the remote control 50. In this case, when the ventilation continuation command is input to the controller 15 via the remote control 50, the determination circuitry 42 causes the air-sending control circuitry 43 to continue the fixed-swing mode.

Furthermore, when the air-sending control circuitry 43 causes the fixed-swing mode to be exited, the determination circuitry 42 may notify the user, via the remote control 50, of exit from the fixed-swing mode. This can keep the user from feeling suspicious about the operation of the air-conditioning apparatus 1.

In the process flow described with reference to Fig. 10, during ventilation, operation of the compressor 5 is performed, and the fixed-swing mode is also executed, in which the swing operation in which an air direction of air blown from the load side unit 3 is changed over time is forcefully performed. This can prevent a significant change in the room temperature Trm and stir air in the room Rm. The occurrence of an area where air is stagnant, that is, the occurrence of an area where the concentration of airborne droplets, which may be a cause of infectious diseases, is less likely to decrease can be prevented without a natural ventilation path being blocked. As a result, the concentration of airborne droplets is leveled off without the health of a person present in the room Rm being damaged, thereby enabling a reduction in infectious risks to the person present in the room Rm.

Furthermore, in the fixed-swing mode, the air-sending control circuitry 43 may control the rotation frequency of the indoor fan 11 such that air volume is larger than air volume in the swing operation in the normal air-sending mode. The air-sending control circuitry 43 may control angles of the vertical flaps 32a to 32e and horizontal flaps 33 in the air direction adjuster 30 or the rotation frequency of the indoor fan 11 such that air velocity is larger than air velocity in the swing operation in the normal air-sending mode. An increase in air velocity or air volume can enhance the effect of stirring air in the room, and the effect of leveling off the concentration of droplets, which may be a cause of infectious diseases, is enhanced.

Furthermore, in the fixed-swing mode, the air-sending control circuitry 43 may make a rate of change of angles of the vertical flaps 32a to 32e and horizontal flaps 33 slower than a rate of change of the angles in the swing operation in the normal air-sending mode. In this case, the effect of promoting turbulence caused by operation of flaps is prevented, and air blown from the load side unit 3 can be caused to reach area farther away from the load side unit 3. As a result, the effect of leveling off the concentration of droplets, which may be a cause of infectious diseases, is enhanced.

In Embodiment 1, of reasons why air direction control is executed to reduce infectious risks, main three reasons will be described.

### (1) Flow of Air Is Not Blocked

During ventilation, a natural flow of air is produced in a room. In a case where air is sent, for example, by an air-conditioning apparatus, it is important to design an air direction such that the natural flow of air is not blocked. As for the locations of a window, an air-conditioning apparatus, and a ventilator, every case can be considered, and it is therefore difficult to predict how a natural flow of air will occur. Thus, in Embodiment 1, when air is sent without an air direction being fixed, such a natural flow of air is kept from being blocked. Incidentally, in a case where air is sent to a window or ventilator, a natural flow of air may be kept from being blocked by reducing a time period during which air is sent.

### (2) Location of Stagnation Is Difficult to Identify

In a place far away from a ventilation path or around an infected person, the concentration of airborne droplets is likely to increase, and air stagnation is likely to occur. However, places where air stagnation is likely to occur vary according to a room layout or a window to be opened, and a huge number of patterns can be considered. It is basically difficult to measure a concentration distribution of airborne droplets. When measurements are performed, a plurality of expensive sensors have to be installed. Furthermore, the location of a person who is an infectious source changes every moment. Under such circumstances, it is difficult to derive an air-sending direction that is the most efficient in ventilation. Thus, in Embodiment 1, an air direction is not fixed intentionally, and infectious risks are thereby reduced in every ventilation state.

### (3) Position of Opening in Window Cannot Be Identified

When a position of an opening in a window and an outside wind direction can be identified, a ventilation path can be estimated. Hence, conditioned air is supplied into an optimal possible place while ventilation is provided, making it possible to keep conditioned air from being discharged directly outside a room. However, a position of an opening in a window and an outside wind direction have to be estimated by analyzing a room layout of a house, the arrangement of nearby other houses, and outside wind information with high accuracy. Thus, in Embodiment 1, a swing operation that is optimal possible for all situations is used.

Next, a ventilation method by which droplet infection is discharged will be described by comparing dust, CO₂, and formaldehyde.

### (1) Ventilation

Dust, and formaldehyde, which may be a cause of the sick building syndrome, occur regardless of the presence or absence of a person, and thus ventilation has to be provided at all times. On the other hand, CO₂ and airborne droplets occur when a person is present, and thus ventilation is more effective in which ventilation timing is a period of time when a person is present.

### (2) Ease of Diffusion

One of factors that determine the rate of diffusion is a particle size. CO₂ and formaldehyde are several nm in particle size. Airborne droplets and dust range in particle size from several µm to several tens of µm. A particle size relationship is a relationship of CO₂ < formaldehyde < airborne droplet < dust. As a particle size increases, the rate of diffusion decreases, particles are less likely to diffuse, and particles are likely to be gathered locally by convection and gravity. For this reason, as for airborne droplets and dust, irregularities in the concentration are likely to occur in comparison with CO₂ and formaldehyde.

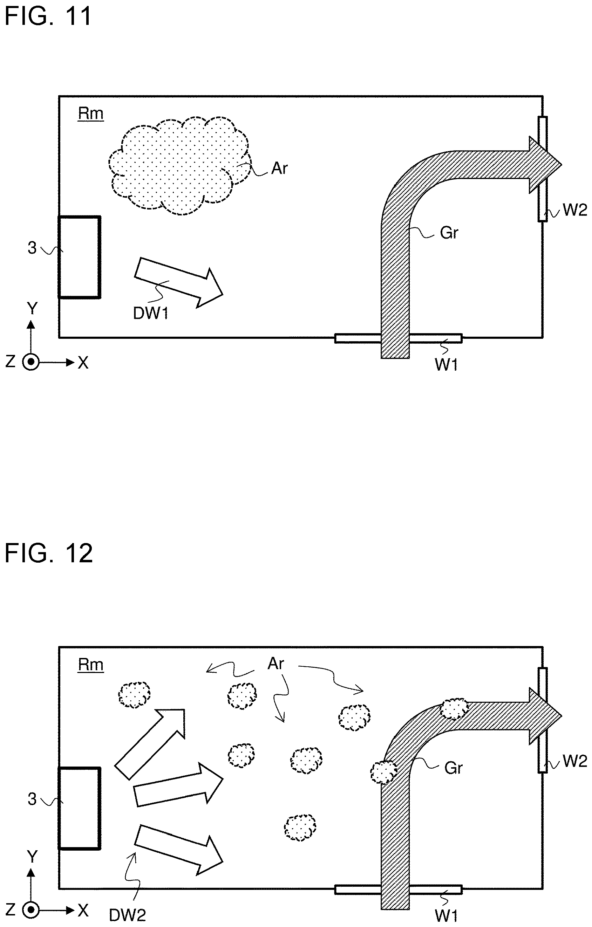

In consideration of these, the effect of a reduction in infectious risks achieved by the air-conditioning apparatus 1 according to Embodiment 1 will be described with reference to Figs. 11 and 12. Figs. 11 and 12 are plan views for describing the effect of a reduction in infectious risks achieved by the air-conditioning apparatus according to Embodiment 1. Fig. 11 illustrates a state before the air-conditioning apparatus 1 operates in the fixed-swing mode in the room Rm illustrated in Fig. 2. Fig. 12 illustrates a state while the air-conditioning apparatus 1 is operating in the fixed-swing mode in the room Rm illustrated in Fig. 2.

As illustrated in Fig. 11, even when the windows W1 and W2 are kept open, outside air entering the room Rm does not necessarily stir air in the room. As illustrated in Fig. 11, in some cases, outside air entering the room Rm from the window W1 flows along a flow path Gr and flows from the window W2 to the outside. In this case, when an air direction DW1 set for the load side unit 3 is fixed to a certain direction, there is a possibility that an area where air Ar is stagnant may occur. Fig. 11 schematically illustrates the air Ar that is stagnant. When there are airborne droplets, which may be an infectious source of infectious diseases, in the area where the air Ar is stagnant, the airborne droplets are floating in the air for several minutes.

As illustrated in Fig. 12, when the air-conditioning apparatus 1 performs the swing operation in which an air direction DW2 from the load side unit 3 is changed over time, the air Ar that is stagnant in Fig. 11 can be caused to diffuse. Even when there are airborne droplets, which may be an infectious source of infectious diseases, in the air Ar, the airborne droplets are caused to diffuse by air blown from the load side unit 3 and are discharged to the outside along the flow path Gr of outside air. This can eliminate an area where air is stagnant in the room Rm, reduce infectious risks to the user present in the room Rm, and prevent a change in the room temperature Trm.

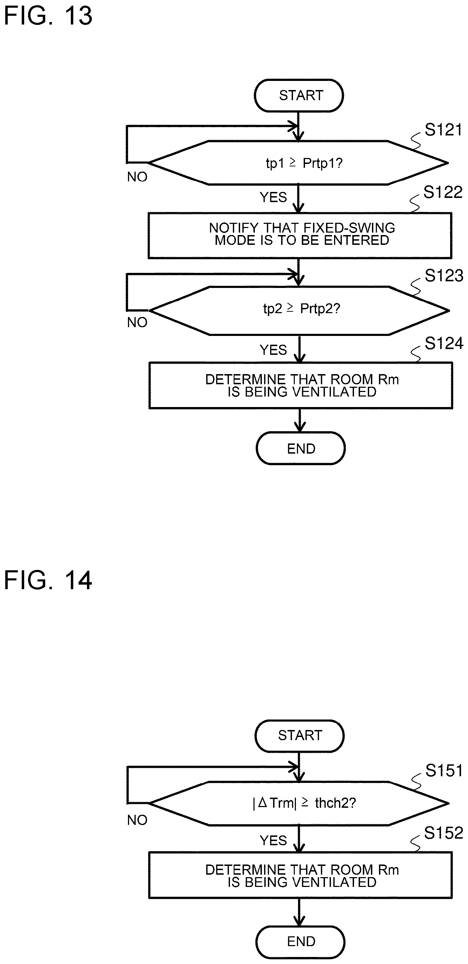

Next, a specific example of the process of step S101 illustrated in Fig. 10 will be described. Fig. 13 is a flowchart illustrating an example of the process of step S101 illustrated in Fig. 10. The determination circuitry 42 refers to a time period measured by the timer 44 and determines whether or not a first waiting time period tp1, which is an elapsed time period since exit from the fixed-swing mode that is previously executed, is longer than or equal to a predetermined first time period Prtp1 (step S121). The first time period Prtp1 is, for example, 30 minutes.

When the first waiting time period tp1 is shorter than the first time period Prtp1, the determination circuitry 42 repeats making a determination in step S121. When the first waiting time period tp1 is longer than or equal to the first time period Prtp1, the determination circuitry 42 notifies the user that the fixed-swing mode is to be entered (step S122). Specifically, the determination circuitry 42 transmits, to the remote control 50, information stating that the fixed-swing mode is to be entered.

Subsequently, the determination circuitry 42 determines whether or not a second waiting time period tp2, which is an elapsed time period from the time when the user is notified that the fixed-swing mode is to be entered, is longer than or equal to a predetermined second time period Prtp2 (step S123). The second time period Prtp2 ranges, for example, from 10 seconds to 1 minute. When the second waiting time period tp2 is shorter than the second time period Prtp2, the determination circuitry 42 repeats making a determination in step S123. When the second waiting time period tp2 is longer than or equal to the second time period Prtp2, the determination circuitry 42 determines that the room Rm is being ventilated (step S124).

The first time period Prtp1 is a time period (for example, n = 30 minutes) that elapses from the time when an infectious risk reduction mode is previously entered. Thus, the infectious risk reduction mode can be entered at an appropriate timing. The first time period Prtp1 is a period in which the user is notified that the fixed-swing mode for reducing infectious risks is to be entered and the user is thus requested to open a window. The reason why the first time period Prtp1 = 30 minutes is described as an example is because the Ministry of Health, Labour and Welfare in Japan recommends a ventilation method in which ventilation is provided about for several minutes twice an hour. A timing when the user opens a window does not have to be the same as a timing when the fixed-swing mode is to be entered. Furthermore, the beginning of the first waiting time period tp1 is not limited to a timing when the fixed-swing mode that is previously executed is exited and may be a timing when the fixed-swing mode that is previously executed is entered.

When the process of step S101 illustrated in Fig. 10 is flow processing illustrated in Fig. 13, it is determined that the fixed-swing mode is necessary for the air-conditioning apparatus 1 to reduce infectious risks, and the user is automatically notified that air direction control is to be fixed to the swing operation. In this case, an operation that is not set by the user is kept from being performed by the air-conditioning apparatus 1 of its own accord, and the user can be kept from feeling suspicious about the operation of the air-conditioning apparatus 1. In step S122, the determination circuitry 42 may notify the user of a request to open a window.

Furthermore, in step S122, the determination circuitry 42 may obtain permission of the user when notifying the user that air direction control is to be changed. When the user operates the remote control 50 to input permission for a change to the fixed-swing mode, the determination circuitry 42 causes the air-sending control circuitry 43 to cause the fixed-swing mode to be entered. In this case as well, an operation that is not set by the user is kept from being performed by the air-conditioning apparatus 1 of its own accord, and the user can be kept from feeling suspicious about the operation of the air-conditioning apparatus 1. Furthermore, the air-conditioning apparatus 1 can obtain permission from the user for the comfort of the user not to be temporarily provided before the fixed-swing mode is entered.

Next, another specific example of the process of step S101 illustrated in Fig. 10 will be described. Fig. 14 is a flowchart illustrating another example of the process of step S101 illustrated in Fig. 10. The determination circuitry 42 calculates an absolute value |ΔTrm| of an amount of change ΔTrm in the room temperature Trm detected by the room temperature sensor 34 per unit time. Subsequently, the determination circuitry 42 determines whether or not the absolute value |ΔTrm| is larger than or equal to a predetermined second change threshold value thch2 (step S151). When the absolute value |ΔTrm| is smaller than the second change threshold value thch2, the determination circuitry 42 calculates an absolute value |ΔTrm| and repeats making a determination in step S151.

As a result of the determination made in step S151, when the absolute value |ΔTrm| is larger than or equal to the second change threshold value thch2, the determination circuitry 42 determines that a window is kept open and that the room temperature Trm has been varied significantly by the outside air temperature and thus determines that the room Rm is being ventilated (step S152).

Incidentally, when the heating operation and the cooling operation are the same in the absolute value of the amount of change ΔTrm or the absolute value Abv, the refrigeration cycle control circuitry 41 may set the operating frequency fc of the compressor 5 such that the operating frequency fc in the cooling operation is larger than the operating frequency fc in the heating operation. A reduction in sensible heat capacity due to dehumidification occurs during the cooling operation. Thus, when the operating frequency fc is made larger than the operating frequency fc during the heating operation, a change in the room temperature Trm can be moderated as much as a change in the room temperature Trm is moderated during the heating operation.

The air-conditioning apparatus 1 according to Embodiment 1 includes the heat source side unit 2 including the compressor 5 and the heat source side heat exchanger 7, the load side unit 3 including the load side heat exchanger 10 connected to the compressor 5 via a refrigerant pipe, the indoor fan 11, the air direction adjuster 30, and the controller 15. The indoor fan 11 is provided in the load side unit 3, causes air sucked from an air-conditioned space to exchange heat with refrigerant at the load side heat exchanger 10, and then sends the air to the air-conditioned space. The air direction adjuster 30 is provided in the load side unit 3 and adjusts an air direction, which is a blow direction in which air is blown by the indoor fan 11 from the load side unit 3 to the air-conditioned space. The controller 15 controls the compressor 5, the indoor fan 11, and the air direction adjuster 30. The controller 15 determines whether or not the air-conditioned space is being ventilated and executes, in a case where the air-conditioned space is being ventilated, the fixed-swing mode in which the swing operation in which the air direction is changed over time by controlling the air direction adjuster 30 is forcefully performed. At a time when the fixed-swing mode is to be entered, the controller 15 activates the compressor 5 when the compressor 5 is stopped and continues operation of the compressor 5 when the compressor 5 is operating.

In Embodiment 1, when ventilation is provided, the compressor 5 is activated when the compressor 5 is stopped, and the operation of the compressor 5 is continued when the compressor 5 is operating. During ventilation, as for air sending control, the swing operation is forcefully performed. For this reason, a significant change in the room temperature Trm is prevented, and air in a room is stirred to make it possible to also prevent the occurrence of an area where air is stagnant. As a result, not only a reduction in health risks to a person present in the room but also a reduction in infectious risks to the person present in the room can be achieved because, even when there are airborne droplets, which may be a cause of infectious diseases, in the room, the concentration of airborne droplets is leveled off.

Ventilation by opening of a window recommended by the Ministry of Health, Labour and Welfare in Japan is expected to be effective as a measure against infectious diseases. However, when an outside air temperature is higher or lower than a room air temperature, when outside air is introduced into a room, there is concern about health risks due to a sudden change in room air temperature, and measures against infectious diseases and a reduction in health risks are important. As an example of health risks, heat shock by which the body is damaged by sudden temperature changes can be considered.

For example, in winter, when a window in a room is put into an open state for ventilation during the heating operation of an air-conditioning apparatus, the body of a person present in the room is rapidly cooled by outside air. When the body of the person is cooled, blood vessels constrict, and a blood pressure suddenly rises. Such a change in blood pressure puts a strain on the heart. In the air-conditioning apparatus 1 according to Embodiment 1, when ventilation is provided, the compressor 5 is activated when the compressor 5 is stopped, the operation of the compressor 5 is continued when the compressor 5 is operating, and thus a change in temperature in the room Rm is moderated. Furthermore, since the swing operation is performed during ventilation, air in the room Rm is stirred to make it possible to prevent the occurrence of an area where airborne droplets, which may be a cause of infectious diseases, are stagnant. As a result, infectious risks and health risks can be reduced as described above.

Furthermore, in a case where an air-conditioning apparatus continues the cooling operation or the heating operation during ventilation, when the air-conditioning apparatus executes temperature control such that a room temperature approaches a set temperature, compressor capacity has to be increased according to a change in room temperature due to outside air, resulting in large energy loss. On the other hand, in the air-conditioning apparatus 1 according to Embodiment 1, the normal temperature control mode or the temperature change moderation mode is selected on the basis of, of the outside air temperature Tot, a condensing temperature during the cooling operation, and an evaporating temperature during the heating operation, any of monitoring values Vmn, or the amount of change ΔTrm in the room temperature Trm. In Embodiment 1, criteria for preventing a sudden change in the room temperature Trm are set. When temperature control to be used is appropriately changed in accordance with the set criteria, an unnecessary increase in capacity of the compressor 5 is avoided. For this reason, in comparison with a case where the normal temperature control mode is selected uniformly, energy savings can be achieved.

Next, the effectiveness of the air-conditioning apparatus 1 according to Embodiment 1 will be described from the viewpoint of measures against infectious diseases recommended by the Ministry of Health, Labour and Welfare in Japan, and the actual situation of ventilation.

The Ministry of Health, Labour and Welfare in Japan recommends, as a measure against infectious diseases, that the frequency of ventilation by opening of a window be larger than or equal to 2 [times/h]. As for 24-hour ventilation provided by mechanical ventilation specified by the Building Standards Act in Japan, the frequency of ventilation is 0.5 [times/h]. Hence, the frequency of ventilation for a measure against infectious diseases is higher than the frequency of 24-hour ventilation specified by the Building Standards Act in Japan, and ventilation by opening of a window is necessary in addition to 24-hour ventilation.

On the other hand, as the performance of dwellings increases, the airtightness of housing constructions increases, and thus, some ventilator layouts may cause the occurrence of an area where air is stagnant, that is, the occurrence of an area where the concentration of airborne droplets, which may be a cause of infectious diseases, is less likely to decrease. Furthermore, as for a window, in some cases, a position to which the window can be opened is limited from a privacy standpoint or for room layout reasons. For this reason, in some cases, air stagnation (an area where the concentration of airborne droplets is less likely to decrease) occurs depending on how and to what extent the window is opened. Consequently, in some cases, infectious disease risks are not sufficiently reduced even when ventilation, for example, by opening of a window is provided.

In the related art, an air-sending function focusing on the comfort of users has been proposed. In recent years, however, measures against infectious diseases of influenza and COVID-19 have become important, and an air-conditioning apparatus having a high air-sending function is required to further have a function of reducing infectious risks.

In response to such a request, the air-conditioning apparatus 1 according to Embodiment 1 can reduce not only infectious risks but also health risks for a change in room temperature due to ventilation to a person present in a room as described above.

### Embodiment 2

In Embodiment 2, as for means that determines whether or not a window is kept open, a method different from that in Embodiment 1 is provided. In Embodiment 2, components that are the same as those in Embodiment 1 are denoted by the same reference signs, and a detailed description of the same components is omitted.

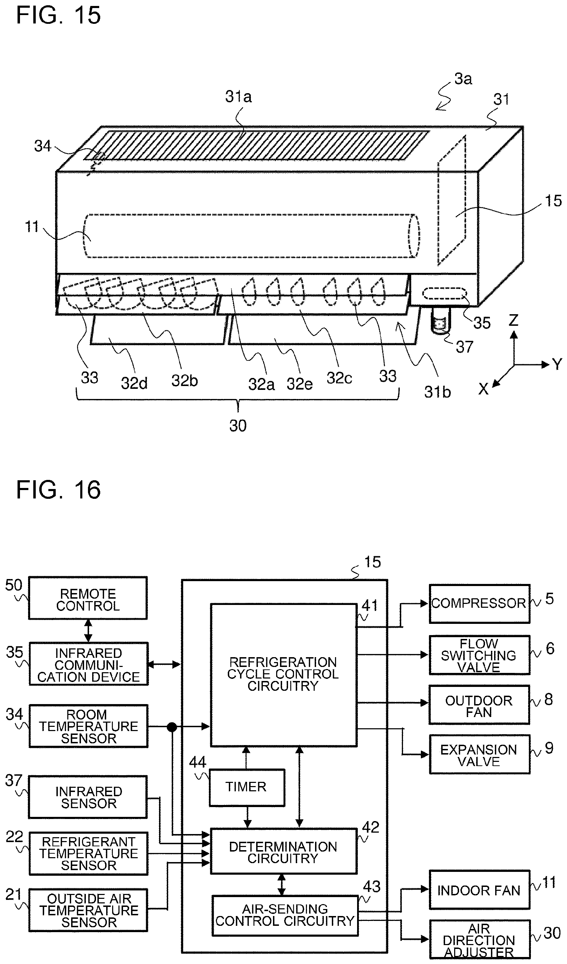

A configuration of the air-conditioning apparatus 1 according to Embodiment 2 will be described. Fig. 15 is an external schematic view illustrating an example of a configuration of a load side unit of the air-conditioning apparatus according to Embodiment 2. As illustrated in Fig. 15, in a load side unit 3a, an infrared sensor 37 is provided to the front of the casing 31 in addition to components described with reference to Fig. 3. The infrared sensor 37 is connected to the controller 15 via a signal line (not illustrated). The infrared sensor 37 scans the room Rm in the vertical direction illustrated in Fig. 4 and in the horizontal direction illustrated in Fig .5, detects a temperature in the room Rm, and generates a two-dimensional thermal image representing a temperature distribution. The infrared sensor 37 transmits data of the generated two-dimensional thermal image to the controller 15.

Fig. 16 is a functional block diagram illustrating an example of the configuration of the controller of the air-conditioning apparatus according to Embodiment 2. The determination circuitry 42 acquires data of a thermal image from the infrared sensor 37. The determination circuitry 42 determines, from the thermal image acquired from the infrared sensor 37, the location of a window in the room Rm and whether or not the window is kept open.

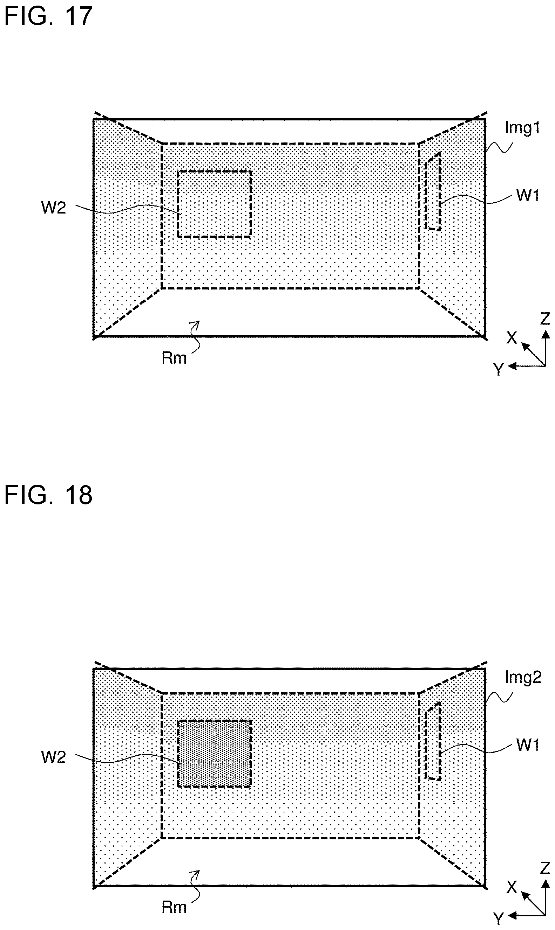

A thermal image generated by the infrared sensor 37 will be described with reference to Figs. 17 and 18. Fig. 17 is a conceptual diagram illustrating an example of a case where a temperature distribution detected by the infrared sensor illustrated in Fig. 15 is displayed on a two-dimensional thermal image. Fig. 18 is another conceptual diagram illustrating an example of a case where a temperature distribution detected by the infrared sensor illustrated in Fig. 15 is displayed on a two-dimensional thermal image.

Here, a description will be provided by using a case where the air-conditioning apparatus 1 is performing the cooling operation. Fig. 17 illustrates a case where the window W2 is kept closed. Fig. 18 illustrates a case where the window W2 is kept open. In Figs. 17 and 18, a difference in density between patterns of dots represents a difference in temperature. In the examples of Figs. 17 and 18, as the dot density increases, a temperature increases. Furthermore, in Figs. 17 and 18, for convenience of explanation, borders between a wall, a floor, a ceiling, and other portions are represented by dashed lines. In general, materials of a wall, a floor, and a ceiling have different thermal conductivities. For this reason, in a two-dimensional thermal image representing a temperature distribution, temperatures of the wall, the floor, and the ceiling differ from one another, and thus the determination circuitry 42 can detect each border from the thermal image.

In a thermal image Img1 illustrated in Fig. 17, walls in the room Rm and the windows W1 and W2 are equal in temperature distribution. On the other hand, in a thermal image Img2 illustrated in Fig. 18, a window W2 portion is different in temperature distribution from the walls in the room Rm. When the window W2 is kept open, for example, a temperature of a wall of an adjacent house is detected by the infrared sensor 37. When the wall of the adjacent house is exposed to direct sunlight, a temperature of a portion corresponding to the window W2 is detected to be high as illustrated in Fig. 18. The determination circuitry 42 can determine the location of the window W2 and whether or not the window W2 is kept open by comparing the thermal image Img1 illustrated in Fig. 17 with the thermal image Img2 illustrated in Fig. 18.

Operation of the air-conditioning apparatus 1 according to Embodiment 2 is similar to the operation described with reference to Fig. 10 in Embodiment 1, and thus a detailed description of the operation of the air-conditioning apparatus 1 according to Embodiment 2 is omitted. In Embodiment 2, an example of the process of step S101 illustrated in Fig. 10 will be described.

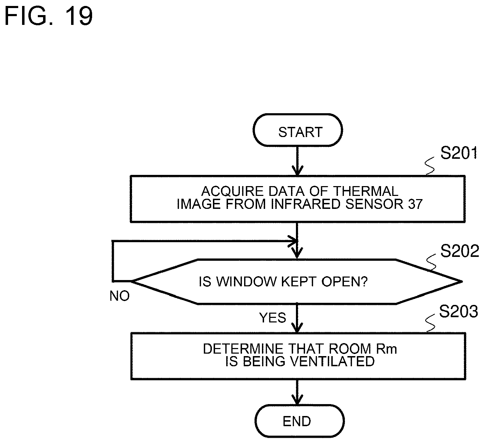

Fig. 19 is a flowchart illustrating an example of the process of step S101 illustrated in Fig. 10 in Embodiment 2. The determination circuitry 42 acquires data of a thermal image from the infrared sensor 37 (step S201). The determination circuitry 42 determines, from the thermal image acquired from the infrared sensor 37, the location of a window in the room Rm and whether or not the window is kept open (step S202). As a result of the determination, when the window is kept closed, the determination circuitry 42 returns to step S201. On the other hand, as a result of the determination made in step S202, when the window is kept open, the determination circuitry 42 determines that the room Rm is being ventilated (step S203).

In Embodiment 2, the air-conditioning apparatus 1 can automatically determine whether or not a window is kept open, and can enter the fixed-swing mode and the temperature change moderation mode at a timing when the user opens the window. This can further reduce health risks and infectious risks to a person present in the room Rm.

### Reference Signs List

1: air-conditioning apparatus, 2: heat source side unit, 3, 3a: load side unit, 5: compressor, 6: flow switching valve, 7: heat source side heat exchanger, 8: outdoor fan, 9: expansion valve, 10: load side heat exchanger, 11: indoor fan, 15: controller, 16: refrigerant pipe, 18: refrigerant circuit, 21: outside air temperature sensor, 22: refrigerant temperature sensor, 30: air direction adjuster, 31: casing, 31a: air inlet, 31b: air outlet, 32a to 32e: vertical flap, 33: horizontal flap, 34: room temperature sensor, 35: infrared communication device, 37: infrared sensor, 41: refrigeration cycle control circuitry, 42: determination circuitry, 43: air-sending control circuitry, 44: timer, 50: remote control, 51: infrared communication circuitry, 52: operation circuitry, 53: display circuitry, 54: control circuitry, 80: processing circuit, 81: processor, 82: memory, 83: bus, DW1, DW2: air direction, Gr: flow path, Img1, Img2: thermal image, Rm: room, W1, W2: window

## Claims

1. An air-conditioning apparatus comprising:
a heat source side unit including a compressor and a heat source side heat exchanger;
a load side unit including a load side heat exchanger connected to the compressor via a refrigerant pipe;
a fan provided in the load side unit and configured to cause air sucked from an air-conditioned space to exchange heat with refrigerant at the load side heat exchanger and then send the air to the air-conditioned space;
an air direction adjuster provided in the load side unit and configured to adjust an air direction, which is a blow direction in which air is blown by the fan from the load side unit to the air-conditioned space; and
a controller configured to control the compressor, the fan, and the air direction adjuster,
the controller being configured to determine whether or not the air-conditioned space is being ventilated and execute, in a case where the air-conditioned space is being ventilated, a fixed-swing mode in which a swing operation in which the air direction is changed over time by controlling the air direction adjuster is forcefully performed, and configured to, at a time when the fixed-swing mode is to be entered, activate the compressor when the compressor is stopped and continue operation of the compressor when the compressor is operating.

2. The air-conditioning apparatus of claim 1, wherein the controller is configured to, when the controller executes the fixed-swing mode, change an angle of the air direction inclined to a reference direction, which is predetermined, in one or both of a horizontal direction and a vertical direction by controlling the air direction adjuster.

3. The air-conditioning apparatus of claim 1 or 2, comprising:
an outside air temperature sensor configured to detect an outside air temperature; and
a refrigerant temperature sensor provided to the heat source side heat exchanger and configured to detect a condensing temperature during a cooling operation and an evaporating temperature during a heating operation,
wherein the controller is configured to, at a time when the fixed-swing mode is to be entered, when an absolute value of a difference between, of monitoring values of the outside air temperature, the condensing temperature, and the evaporating temperature, any monitoring value and a set temperature corresponding to the monitoring value is larger than or equal to a first threshold value, which is predetermined, cause an operating frequency of the compressor to reach or exceed the operating frequency before entry into the fixed-swing mode.

4. The air-conditioning apparatus of claim 1 or 2, comprising:
an outside air temperature sensor configured to detect an outside air temperature; and
a refrigerant temperature sensor provided to the heat source side heat exchanger and configured to detect a condensing temperature during a cooling operation and an evaporating temperature during a heating operation,
wherein the controller is configured to, at a time when the fixed-swing mode is to be entered, when an absolute value of a difference between, of monitoring values of the outside air temperature, the condensing temperature, and the evaporating temperature, any monitoring value and a set temperature corresponding to the monitoring value is smaller than a first threshold value, which is predetermined, and larger than or equal to a second threshold value, which is a threshold value smaller than the first threshold value, set an operating frequency of the compressor within a range larger than or equal to a lower limit value of the operating frequency and smaller than or equal to the operating frequency before entry into the fixed-swing mode.

5. The air-conditioning apparatus of claim 4, comprising
a room temperature sensor configured to detect a room temperature as a temperature of air in the air-conditioned space,
wherein the controller is configured to, at a time when the fixed-swing mode is to be entered, in a case where the absolute value of the difference between the monitoring value and the set temperature is smaller than the first threshold value and larger than or equal to the second threshold value, when an absolute value of an amount of change in the room temperature when a waiting time period, which is predetermined, elapses from a time when the fixed-swing mode is entered is larger than a first change threshold value, which is predetermined, make the operating frequency of the compressor larger than the operating frequency before entry into the fixed-swing mode.

6. The air-conditioning apparatus of any one of claims 3 to 5, wherein the controller is configured to, at a time when the fixed-swing mode is to be entered, when the absolute value of the difference between the monitoring value and the set temperature is larger than or equal to a third threshold value, which is a threshold value larger than the first threshold value, maintain the operating frequency of the compressor at the operating frequency before entry into the fixed-swing mode and notify a user of a prompting message about an increase in ventilation air volume stating that a window is to be kept open at all times or that air volume of a ventilator is to be increased.

7. The air-conditioning apparatus of any one of claims 3 to 6, wherein the controller is configured to, when the heating operation and the cooling operation are equal in an absolute value of the amount of change or the absolute value of the difference between the monitoring value and the set temperature, set the operating frequency such that the operating frequency in the cooling operation is larger than the operating frequency in the heating operation.

8. The air-conditioning apparatus of claim 3, wherein the controller is configured to, while the controller executes the fixed-swing mode, increase the operating frequency in response to the absolute value of the difference between the monitoring value and the set temperature.

9. The air-conditioning apparatus of claim 4, wherein the controller is configured to, when the controller reduces the operating frequency, determine the operating frequency to be set for the compressor in response to the absolute value of the difference between the monitoring value and the set temperature and maintain the operating frequency of the compressor at the determined operating frequency while the fixed-swing mode is being executed.

10. The air-conditioning apparatus of any one of claims 1 to 9,
wherein the air direction adjuster includes a flap configured to change an angle of the air direction inclined to a reference direction, which is predetermined, and
wherein the controller is configured to, in the fixed-swing mode, make a rate of change of the angle of the flap slower than a rate of change of the angle in the swing operation in a normal air-sending mode, which is not the fixed-swing mode.

11. The air-conditioning apparatus of any one of claims 1 to 10, wherein the controller is configured to, in the fixed-swing mode, make a rotation frequency of the fan larger than a rotation frequency before entry into the fixed-swing mode.

12. The air-conditioning apparatus of any one of claims 1 to 11,
wherein the controller includes a timer configured to measure a time period, and
wherein the controller is
configured to refer to a time period measured by the timer and determine whether or not a first waiting time period, which is an elapsed time period since exit from the fixed-swing mode that is previously executed, is longer than or equal to a first time period, which is predetermined,
configured to, when the first waiting time period is longer than or equal to the first time period, notify a user that the fixed-swing mode is to be entered, and,
configured to, when a second waiting time period, which is an elapsed time period from a time when the user is notified that the fixed-swing mode is to be entered, reaches or exceeds a second time period, which is predetermined, determine that the air-conditioned space is being ventilated.

13. The air-conditioning apparatus of any one of claims 1 to 11, comprising
a room temperature sensor configured to detect a room temperature as a temperature of air in the air-conditioned space,
wherein the controller is configured to determine whether or not an absolute value of an amount of change in the room temperature detected by the room temperature sensor per unit time is larger than or equal to a second change threshold value, which is predetermined, and determine, when the absolute value of the amount of change is larger than or equal to the second change threshold value, that the air-conditioned space is being ventilated.

14. The air-conditioning apparatus of any one of claims 1 to 11, further comprising
an infrared sensor configured to acquire a thermal image representing a temperature distribution in the air-conditioned space,
wherein the controller is configured to determine, from the thermal image acquired by the infrared sensor, a location of a window in the air-conditioned space and whether or not the window is kept open and determine, when the window is kept open, that the air-conditioned space is being ventilated.
